(19) Europäisches Patentamt
European Patent Office
Office européen des brevets

(11) **EP 4 757 110 A1**

(12) **EUROPEAN PATENT APPLICATION**
published in accordance with Art. 153(4) EPC

(43) Date of publication:
**10.06.2026 Bulletin 2026/24**

(21) Application number: 25768512.3

(22) Date of filing: **13.02.2025**

(51) International Patent Classification (IPC):
*H02J 7/00* (2026.01)        *H02J 3/32* (2026.01)

(52) Cooperative Patent Classification (CPC):
**H02J 3/32; H02J 7/00**

(86) International application number:
**PCT/KR2025/002103**

(87) International publication number:
**WO 2025/187988 (11.09.2025 Gazette 2025/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.03.2024 KR 20240030856
10.02.2025 KR 20250016858**

(71) Applicant: **LG Energy Solution, Ltd.**
**Seoul 07335 (KR)**

(72) Inventors:
• **KIM, Myung-Hwan**
  **Daejeon 34122 (KR)**
• **KIM, Seung-Choo**
  **Daejeon 34122 (KR)**
• **RYU, Je-Chang**
  **Daejeon 34122 (KR)**

(74) Representative: **Goddar, Heinz J.**
**Boehmert & Boehmert
Anwaltspartnerschaft mbB
Pettenkoferstrasse 22
80336 München (DE)**

(54) **SYSTEM OPERATING DEVICE AND SYSTEM OPERATING METHOD FOR BATTERY FORMATION SYSTEM**

(57)    There is provided a system operating apparatus and method for a battery formation system. The system operating apparatus according to the present disclosure includes a monitoring circuit to monitor a condition of a power supply facility, and a controller to, in response to a failure of the power supply facility being monitored, determine if it is necessary to modify at least one of first to m-th operation schedules of first to m-th chargers/dischargers included in a charging/discharging facility based on the first to m-th operation schedules and electric energy information of an energy storage apparatus, and stop each charger/discharger of the first to m-th chargers/-dischargers associated with each operation schedule determined to need to be modified. m is a natural number of 2 or greater.

FIG. 1

## Description

TECHNICAL FIELD

The present disclosure relates to a control technology for improving the efficiency of a formation process performed by a battery formation system.

This application is based on and claims priority to Korean Patent Application No. 10-2024-0030856 filed on March 4, 2024 and Korean Patent Application No. 10-2025-0016858 filed on February 10, 2025 in the Republic of Korea, the disclosures of which are incorporated herein by reference.

BACKGROUND

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that can be repeatedly charged and discharged.

Batteries on the market now include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages that recharging can be done whenever it is convenient, the self-discharge rate is very low and the energy density is high.

Batteries are manufactured as finished products through an assembly process and a formation process in a sequential order. In the assembly process, a stack of a positive electrode, a negative electrode and a separator is housed in an outer packaging together with an electrolyte, followed by sealing. In the formation process, a predetermined charging/discharging procedure is performed on the batteries having undergone the assembly process. When the formation process is performed on the batteries, solid electrolyte interphase (SEI) is formed on the negative electrode surface, establishing the intended electrical properties.

The batteries having undergone the assembly process are transported to a battery formation system in a sequential order, and the battery formation system sequentially performs the formation process on the batteries in a first-in, first-out manner.

The battery formation system includes a charging/discharging facility to individually charge and discharge a plurality of battery boxes and a power supply facility to supply direct current power to the charging/discharging facility.

In the event of failure of the power supply facility, there is a disruption in the supply of power from the power supply facility to the charging/discharging facility. As a result, the formation process for all the battery boxes may be stopped until the failure of the power supply facility is resolved.

DISCLOSURE

Technical Problem

The present disclosure is designed to solve the above-described problems, and therefore the present disclosure is directed to providing an apparatus and method for preventing a situation in which a formation process for all battery boxes is completely stopped by adjusting the operation schedule of at least one charger/discharger included in a charging/discharging facility in the event of failure of a power supply facility of a battery formation system.

These and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

Technical Solution

A system operating apparatus according to an aspect of the present disclosure is for a battery formation system including a power supply facility, a charging/discharging facility and an energy storage apparatus. The system operating apparatus includes a monitoring circuit to monitor a condition of the power supply facility, and a controller to, in response to a failure of the power supply facility being monitored, determine if it is necessary to modify at least one of first to m-th operation schedules of first to m-th chargers/dischargers included in the charging/discharging facility based on the first to m-th operation schedules and electric energy information of the energy storage apparatus, and stop each charger/discharger of the first to m-th chargers/dischargers associated with each operation schedule determined to need to be modified. m is a natural number of 2 or greater.

The controller may determine if it is necessary to modify the at least one of the first to m-th operation schedules, by comparing electric energy that will be supplied to the charging/discharging facility with dischargeable energy of the energy storage apparatus.

The controller may determine that it is necessary to modify the at least one of the first to m-th operation schedules, when the electric energy that will be supplied is larger than the dischargeable energy.

The controller may determine the electric energy that will be supplied based on a difference between a current value and a maximum value of a total electric energy of the charging/discharging facility.

The controller may determine i-th to j-th remaining charging energy of i-th to j-th chargers/dischargers operating in a charge mode among the first to m-th chargers/dischargers. The controller may determine that it is necessary to modify a-th to j-th operation schedules among i-th to j-th operation schedules. (i) A sum of a-th to j-th remaining charging energy among the i-th to j-th remaining charging energy may be equal to or larger than the dischargeable energy, and (ii) a sum of (a+1)-th to j-th remaining charging energy may be smaller than the dischargeable energy. i is a natural number of 1 or greater, j is a natural number that is larger than i and equal to or smaller than m, and a is a natural number that is equal to or larger than i and smaller than j.

The controller may determine if it is necessary to modify the at least one of the first to m-th operation schedules, by comparing electric energy that will be regenerated by the charging/discharging facility with chargeable energy of the energy storage apparatus.

The controller may determine that it is necessary to modify the at least one of the first to m-th operation schedules, when the electric energy that will be regenerated is larger than the chargeable energy.

The controller may determine the electric energy that will be regenerated based on a difference between a current value and a minimum value of a total electric energy of the charging/discharging facility.

The controller may determine k-th to 1-th remaining discharging energy of k-th to l-th chargers/dischargers operating in a discharge mode among the first to m-th chargers/dischargers. The controller may determine that it is necessary to modify b-th to 1-th operation schedules among k-th to l-th operation schedules. (i) A sum of b-th to 1-th remaining discharging energy among the k-th to l-th remaining charging energy may be equal to or larger than the chargeable energy, and (ii) a sum of (b+1)-th to 1-th remaining discharging energy may be smaller than the chargeable energy. k is a natural number of 1 or greater, l is a natural number that is larger than k and equal to or smaller than m, and b is a natural number that is equal to or larger than k and smaller than 1.

A battery formation system according to another aspect of the present disclosure includes the system operating apparatus.

A system operating method according to still another aspect of the present disclosure is for a battery formation system including a power supply facility, a charging/discharging facility and an energy storage apparatus. The system operating method includes monitoring a condition of the power supply facility, in response to a failure of the power supply facility being monitored, determining if it is necessary to modify at least one of first to m-th operation schedules of first to m-th chargers/dischargers included in the charging/discharging facility based on the first to m-th operation schedules and electric energy information of the energy storage apparatus, and stopping each charger/discharger of the first to m-th chargers/dischargers associated with each operation schedule determined to need to be modified. m is a natural number of 2 or greater.

The determining if it is necessary to modify the at least one of the first to m-th operation schedules may include determining if it is necessary to modify the at least one of the first to m-th operation schedules, by comparing electric energy that will be supplied to the charging/discharging facility with dischargeable energy of the energy storage apparatus.

The determining if it is necessary to modify the at least one of the first to m-th operation schedules may include determining that it is necessary to modify the at least one of the first to m-th operation schedules, when the electric energy that will be supplied is larger than the dischargeable energy.

The determining if it is necessary to modify the at least one of the first to m-th operation schedules may include determining if it is necessary to modify the at least one of the first to m-th operation schedules, by comparing electric energy that will be regenerated by the charging/discharging facility with chargeable energy of the energy storage apparatus.

The determining if it is necessary to modify the at least one of the first to m-th operation schedules may include determining that it is necessary to modify the at least one of the first to m-th operation schedules, when the electric energy that will be regenerated is larger than the chargeable energy.

Advantageous Effects

According to at least one of the embodiments of the present disclosure, it may be possible to prevent a situation in which the formation process for all the battery boxes is completely stopped by adjusting the operation schedule of at least one charger/discharger included in the charging/discharging facility in the event of failure of the power supply facility of the battery formation system.

In addition, according to at least one of the embodiments of the present disclosure, it may be possible to prolong the formation process for at least some of the plurality of battery boxes as long as possible by determining which of the plurality of chargers/dischargers to adjust the operation schedule according to which of charging and discharging is dominant at the time when the failure of the power supply facility occurred.

The effects of the embodiments of the present disclosure are not limited to the aforementioned effects, and these and other effects will be clearly understood by those skilled in the art from the appended claims.

BRIEF DESCRIPTION OF THE DRAWINGS

The accompanying drawings illustrate exemplary embodiments of the present disclosure and together with the following detailed description, serve to provide a better understanding of the technical aspects of the present disclosure, and thus the present disclosure should not be construed as being limited to the drawings.

FIG. 1 is a diagram schematically showing the overall architecture of a battery formation system according to an embodiment of the present disclosure.

FIG. 2 is a diagram schematically showing the connection relationship between the components of the battery formation system shown in FIG. 1.

FIG. 3 is a graph referenced in describing an exemplary operation schedule of a charger/discharger.

FIG. 4 is a graph referenced in exemplarily describing a time-dependent change in total power of a charging/discharging facility.

FIG. 5 is a graph referenced in exemplarily describing a time-dependent change in total electric energy of a charging/discharging facility.

FIG. 6 is a flowchart schematically illustrating a system operating method according to another embodiment of the present disclosure.

FIG. 7 is a flowchart schematically illustrating an example of subroutines that may be included in step S630 of FIG. 6.

FIG. 8 is a graph referenced in describing the method of FIG. 7.

FIG. 9 is a flowchart schematically illustrating another example of subroutines that may be included in step S630 of FIG. 6.

FIG. 10 is a graph referenced in describing the method of FIG. 9.

FIG. 11 is a flowchart schematically illustrating an example of subroutines that may be included in step S640 of FIG. 6.

FIGS. 12 and 13 are graphs referenced in describing the method of FIG. 11.

FIG. 14 is a flowchart schematically illustrating another example of subroutines that may be included in step S640 of FIG. 6.

FIGS. 15 and 16 are graphs referenced in describing the method of FIG. 14.

<u>BEST MODE</u>

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspects of the present disclosure but not intended to be limiting, so it should be understood that a variety of other equivalents and modifications could be made thereto at the time the application was filed.

The terms including the ordinal numbers such as "first", "second" and the like, are used to distinguish one element from another among various elements, but not intended to limit the elements by the terms.

Unless the context clearly indicates otherwise, the terms "comprise" and "include" when used in this specification, specify the presence of stated elements, but do not preclude the presence or addition of one or more other elements. Additionally, the term "unit" as used herein refers to a processing unit of at least one function or operation, and may be implemented by hardware and software either alone or in combination.

In addition, throughout this specification, it will be further understood that when an element is referred to as being "connected to" another element, it can be directly connected to the other element or intervening elements may be present.

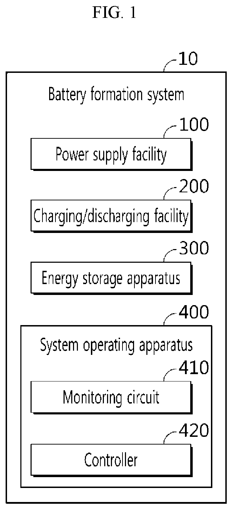

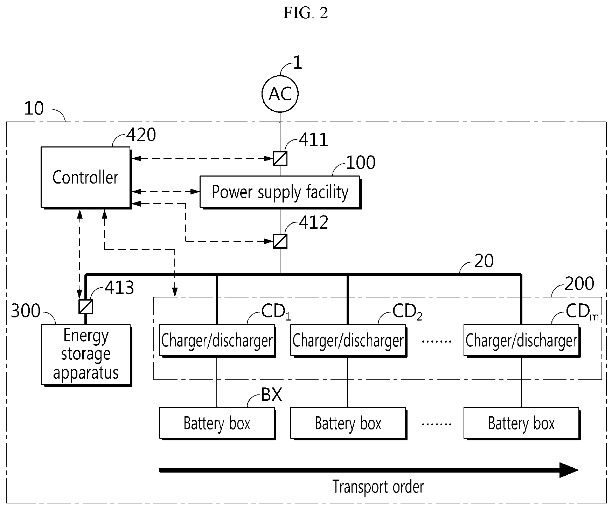

FIG. 1 is a diagram schematically showing the overall architecture of a battery formation system 10 according to an embodiment of the present disclosure, and FIG. 2 is a diagram schematically showing the connection relationship between the components of the battery formation system 10 shown in FIG. 1.

Referring to FIGS. 1 and 2, the battery formation system 10 includes a power supply facility 100, a charging/discharging facility 200, an energy storage apparatus 300, a direct current (DC) grid 20 and a system operating apparatus 400.

The power supply facility 100, the charging/discharging facility 200 and the energy storage apparatus 300 may be electrically coupled through the DC grid 20 to enable bidirectional power supply between them.

The power supply facility 100 is installed on a power line connecting an alternating current (AC) power network 1 to the DC grid 20. The power supply facility 100 converts AC power supplied from the AC power network 1 to DC power and supplies it to the DC grid 20.

The voltage of the DC power supplied from the power supply facility 100 to the DC grid 20 may be maintained at a reference voltage (for example, preset to 370 V) by feedback control.

The power supply facility 100 includes an AC-DC converter. The system operating apparatus 400 may perform ON/OFF control for the AC-DC converter or adjust the magnitude of the DC power supplied from the AC-DC converter to the DC grid 20 according to the condition of the AC power network 1.

The charging/discharging facility 200 includes first to m-th chargers/dischargers $CD_1 \sim CD_m$ where m is a natural number of 2 or greater. The charger/discharger CD may include at least one bidirectional DC-DC converter. When x is a natural number equal to or smaller than m, an x-th charger/discharger $CD_x$ may relay the bidirectional power transmission between a battery box BX transported to the x-th charger/discharger $CD_x$ and the DC grid 20.

The charging/discharging facility 200 may simultaneously perform the individual formation process on a maximum of m battery boxes BX. That is, the battery boxes BX are sequentially transported to the battery formation system 10 after they undergo an assembly process, and the charging/discharging facility 200 sequentially performs the formation process on the battery boxes BX in a first-in, first-out manner. For example, among two battery boxes BX, the battery box BX transported earlier may be charged and discharged by the first charger/discharger $CD_1$, and the battery box BX transported later may be charged and discharged by the second charger/discharger $CD_2$.

In addition, the first to m-th chargers/dischargers $CD_1 \sim CD_m$ may independently operate in a charge mode, a discharge mode and a rest mode. For example, at the same timing, any one of the first to m-th chargers/-dischargers $CD_1 \sim CD_m$ may operate in the charge mode, another may operate in the discharge mode, and the other may operate in the rest mode.

The energy storage apparatus 300 is not limited to a particular one and may include any type of device having the functions of storing and supplying electrical energy, such as a battery bank or an energy storage system (ESS).

The system operating apparatus 400 includes a monitoring circuit 410 and a controller 420.

The monitoring circuit 410 may individually monitor the condition of the power supply facility 100 and the condition of the energy storage apparatus 300.

The monitoring circuit 410 may include at least one of a first sensor module to measure AC power input/output through a first power channel of the power supply facility 100, or a second sensor module 412 to measure DC power input/output through a second power channel of the power supply facility 100. The monitoring circuit 410 may include a third sensor module 413 to detect a voltage and current of the energy storage apparatus 300.

The controller 420 may detect a failure of the power supply facility 100 based on measurement data collected from the first sensor module 411 and/or the second sensor module 412 of the monitoring circuit 410. The type of failure of the power supply facility 100 may include, for example, (i) cessation of operation of the power supply facility 100 due to a breakdown, (ii) a power outage in the AC power network 1, (iii) a disconnected power channel between the AC power network 1 and the power supply facility 100, and (iv) a disconnected power channel between the power supply facility 100 and the DC grid 20. The failure of the power supply facility 100 may lead to interruption of the output operation of charge power from the power supply facility 100 to the charging/-discharging facility 200, and interruption of the input operation of regenerative power from the charging/-discharging facility 200 to the power supply facility 100.

The controller 420 may determine at least one of dischargeable energy or chargeable energy, based on measurement data collected from the third sensor module 413 of the monitoring circuit 410.

The dischargeable energy corresponds to the electric capacity stored in the energy storage apparatus 300, and may refer to surplus electrical energy that may be used to continue the charging operation of the charging/discharging facility 200. For example, in the event of failure of the power supply facility 100, the charge power from the energy storage apparatus 300 may be supplied to at least one charger/discharger operating in the charge mode among the first to m-th chargers/dischargers $CD_1 \sim CD_m$ within the limit of the dischargeable energy.

The chargeable energy corresponds to the electric capacity that may be additionally stored in the energy storage apparatus 300, and may refer to electrical energy that may be used to continue the discharging operation of the charging/discharging facility 200 even in the event of failure of the power supply facility 100. For example, in the event of failure of the power supply facility 100, the regenerative power from at least one charger/-discharger operating in discharge mode among the first to m-th chargers/dischargers $CD_1 \sim CD_m$ may be stored in the energy storage apparatus 300 within the limit of the chargeable energy.

The maximum amount of power that the energy storage apparatus 300 can store may be equal to the sum of the dischargeable energy and the chargeable energy.

The controller 420 is configured to perform a control function related to the first to m-th chargers/-dischargers $CD_1 \sim CD_m$ according to the condition of the power supply facility 100 and the condition of the energy storage apparatus 300 monitored by the monitoring circuit 410.

The controller 420 may include, in hardware, at least one of application specific integrated circuits (ASICs), digital signal processors (DSPs), digital signal processing devices (DSPDs), programmable logic devices (PLDs), field programmable gate arrays (FPGAs), microprocessors or electrical units for performing other functions.

The controller 420 may have a memory. The memory may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory may store data and programs required for the operation by the controller 420. The memory may store data indicating the results of the operation by the controller 420.

The controller 420 may perform the control function for protecting the battery formation system 10 when a failure or potential failure of the power supply facility 100 is identified based on the data collected from the monitoring circuit 410.

As an example, in a charge dominant state where the total charge power supplied from the DC grid 20 to the charging/discharging facility 200 is larger than the regenerative power (referred to as 'total discharge power') supplied from the charging/discharging facility 200 to the DC grid 20, the controller 420 may control the power supply facility 100 to increase the DC power output to the DC grid 20 in order to prevent an excessive voltage drop of the DC grid 20.

As another example, in a discharge dominant state where the regenerative power supplied from the charging/discharging facility 200 to the DC grid 20 is larger than the total charge power supplied from the DC grid 20 to the charging group, the controller 420 may control the power supply facility 100 to reduce the DC power output to the DC grid 20 in order to prevent an excessive voltage rise of the DC grid 20.

When a failure of the power supply facility 100 is not identified from the data collected from the monitoring circuit 410, the controller 420 may control the power supply facility 100 and the first to m-th chargers/dischargers $CD_1$~$CD_m$, following the control sequence according to first to m-th operation schedules associated with the first to m-th chargers/dischargers $CD_1$~$CD_m$, respectively. An x-th operation schedule may be a dataset that defines a charging/discharging sequence of the formation process for the battery box BX transported to the x-th charger/discharger $CD_x$. More specifically, the x-th operation schedule may define a power profile representing a change in power over time from when the x-th charger/discharger $CD_x$ starts the formation process.

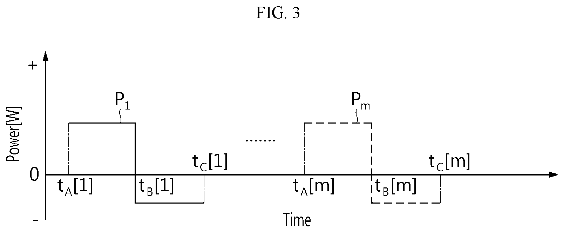

FIG. 3 is a graph referenced in describing an exemplary operation schedule of the charger/discharger.

In the graph of FIG. 3, the horizontal axis (X axis) indicates time and the vertical axis (Y axis) indicates power. For convenience of description, the positive sign is given to the charge power and the negative sign is given to the regenerative power.

Referring to FIG. 3, the power profile $P_1$ corresponds to the operation schedule of the first charger/discharger $CD_1$, and the power profile $P_m$ corresponds to the operation schedule of the m-th charger/discharger $CD_m$.

$t_A[1]$ denotes the starting time of the formation process of the first charger/discharger $CD_1$ for the battery box BX transported to the first charger/discharger $CD_1$, and $t_A[m]$ denotes the starting time of the formation process of the m-th charger/discharger $CD_m$ for the battery box BX transported to the m-th charger/discharger $CD_m$. Each charger/discharger performs the common formation process, so when the power profile $P_1$ is shifted to the right by a time difference between $t_A[1]$ and $t_A[m]$, the power profile $P_1$ and the power profile $P_m$ may completely overlap. Because the power of the power profile $P_1$ at $t_A[1]$ shows the positive sign, the first charger/discharger $CD_1$ may operate in the charge mode at the start of the formation process.

$t_B[1]$ denotes the time when the first charger/discharger $CD_1$ changes from the charge mode to the discharge mode, and $t_B[m]$ denotes the time when the m-th charger/discharger $CD_m$ changes from the charge mode to the discharge mode. Accordingly, the first charger/discharger $CD_1$ may supply the regenerative power to the DC grid 20 from $t_B[1]$, and the m-th charger/discharger $CD_m$ may supply the regenerative power to the DC grid 20 from $t_B[m]$.

$t_C[1]$ denotes the ending time of the formation process of the first charger/discharger $CD_1$, and $t_C[m]$ denotes the ending time of the formation process of the m-th charger/discharger $CD_m$.

For a period of time from $t_C[1]$ to $t_A[m]$, both the first charger/discharger $CD_1$ and the m-th charger/discharger $CD_m$ may operate in the rest mode. In addition, for a period of time from $t_B[1]$ to $t_A[m]$, the first charger/discharger $CD_1$ may operate in the discharge mode and then in the rest mode, and the m-th charger/discharger $CD_m$ may operate in the rest mode. In addition, for a period of time from tc[1] to tc[m], the first charger/discharger $CD_1$ may operate in the rest mode, and the m-th charger/discharger $CD_m$ may operate in the rest mode, the charge mode and the discharge mode in that order. This is because the first to m-th chargers/dischargers $CD_1$~$CD_m$ independently perform the formation process as described above.

For reference, when the individual formation process for m battery boxes BX is performed in the order of the first charger/discharger $CD_1$ to the m-th charger/discharger $CD_m$, tc[m] may be the operation completion time of the charging/discharging facility 200.

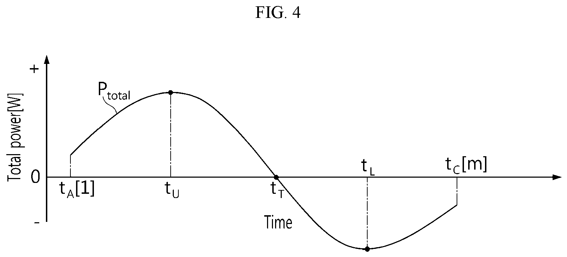

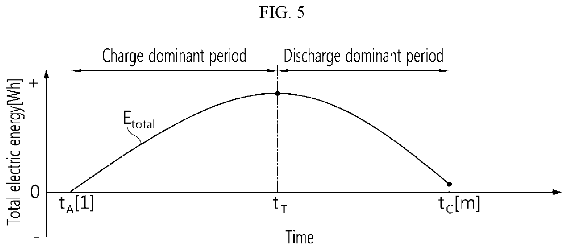

FIG. 4 is a graph referenced in exemplarily describing a time-dependent change in the total power of the charging/discharging facility 200, and FIG. 5 is a graph referenced in exemplarily describing a time-dependent change in the total electric energy of the charging/discharging facility 200.

In the graph of FIG. 4, the horizontal axis (X axis) indicates time and the vertical axis (Y axis) indicates power. The power profile $P_{total}$ represents a change in the total power of the charging/discharging facility 200 over time.

At a specific point in time, the total power of the charging/discharging facility 200 may correspond to a difference between the total charge power and the total regenerative power of the first to m-th chargers/dischargers $CD_1$~$CD_m$. The total charge power may be the sum of charge power supplied to the charger/discharger(s) operating in the charge mode among the first to m-th chargers/dischargers $CD_1$~$CD_m$. The total regenerative power may be the sum of regenerative power supplied from the charger/discharger(s) operating in the discharge mode among the first to m-th chargers/dischargers $CD_1$~$CD_m$.

Referring to FIG. 4, the total power of the charging/discharging facility 200 may indicate the sum of power of the first to m-th chargers/dischargers $CD_1$~$CD_m$. That is, the power of each of the first to m-th chargers/dischargers $CD_1$~$CD_m$ and the total power of the charging/discharging facility 200 may have a relationship according to the following Equation 1.

<Equation 1>

$$P_{total}(t) = \sum_{x=1}^{m} P_x(t)$$

In Equation 1, $P_x(t)$ may denote the power of the x-th charger/discharger $CD_x$ at the time t, and $P_{total}(t)$ may denote the total power of the charging/discharging facility 200 at the time t.

Referring to FIGS. 3 and 4 together, at $t_A[1]$, the first charger/discharger $CD_1$ starts the formation process. Subsequently, the battery boxes BX are transported to the charge/discharge facility 200 in a sequential order, and the second to m-th chargers/dischargers $CD_2\sim CD_m$ start the formation process in a sequential order. Accordingly, until a certain amount of time passes from $t_A[1]$, the total power of the charging/discharging facility 200 gradually increases.

$t_U$ denotes the time when the total power of the charging/discharging facility 200 is at the maximum. The total power of the charging/discharging facility 200 gradually decreases from the time $t_U$ and reaches 0[W] at the time $t_T$. That is, at the time $t_T$, the total charge power is equal to the total discharge power. The state in which the total power of the charging/discharging facility 200 shows the positive sign may be referred to as 'charge dominant state', and a period of time from $t_A[1]$ to $t_T$ during which the charge dominant state is maintained may be referred to as 'charge dominant period'.

In contrast, from the time $t_B[1]$, the power of the first charger/discharger $CD_1$ shows the negative sign, but the total power increases from the time $t_B[1]$ to the time tu, because at least one other charger/discharger operates in the charge mode for the same period of time.

$t_L$ denotes the time when the total power of the charging/discharging facility 200 is at the minimum. The total power of the charging/discharging facility 200 gradually increases from the time $t_L$ to the time tc[m]. The state in which the total power of the charging/discharging facility 200 shows the negative sign may be referred to as 'discharge dominant state (or regeneration dominant state)', and a period of time from $t_T$ to tc[m] during which the discharge dominant state is maintained may be referred to as 'discharge dominant period'.

In the graph of FIG. 5, the horizontal axis (X axis) indicates time and the vertical axis (Y axis) indicates total electric energy. The electric energy curve $E_{total}$ shows a change in the total electric energy of the charging/discharging facility 200 over time.

The total power and the total electric energy of the charging/discharging facility 200 may have a relationship according to the following Equation 2.

<Equation 2>

$$E_{total}(t) = \int_{t_A[1]}^{t} P_{total}(x)dx$$

In Equation 2, $P_{total}(x)$ may denote the total power of the charging/discharging facility 200 at the time x, and $E_{total}(t)$ may denote the total electric energy of the charging/discharging facility 200 from $t_A[1]$ to t.

Referring to FIGS. 4 and 5 together, because the total power of the power profile $P_{total}$ has the positive sign from $t_A[1]$ to $t_T$, the total electric energy of the charging/discharging facility 200 keeps rising from $t_A[1]$ to $t_T$.

At the time $t_T$, the total power of the charging/discharging facility 200 changes from the positive sign to the negative sign, so the total electric energy of the electric energy curve $E_{total}$ is at the maximum at the time $t_T$.

Because the total power of the power profile $P_{total}$ has the negative sign from $t_T$ to tc[m], the total electric energy of the charging/discharging facility 200 keeps decreasing from the time $t_T$ and reaches the minimum at the time tc[m].

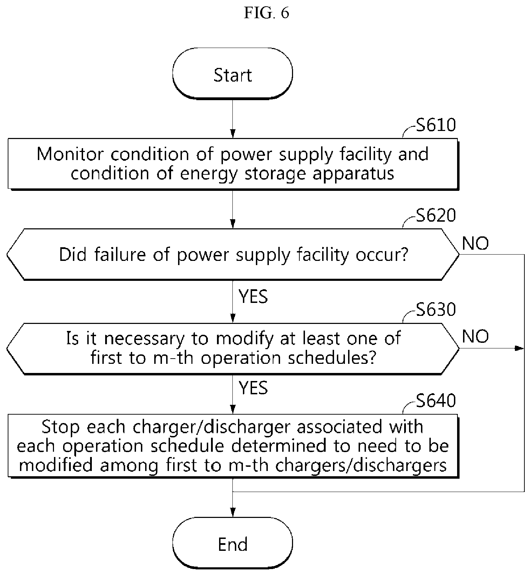

FIG. 6 is a flowchart schematically illustrating a system operation method according to another embodiment of the present disclosure. The method according to FIG. 6 may be periodically or aperiodically performed in a repeated manner by the system operating apparatus 400 while the formation process is performed by the battery formation system 10.

Referring to FIGS. 1 to 6, in step S610, the controller 420 monitors the condition of the power supply facility 100 and the condition of the energy storage apparatus 300 based on the data collected from the monitoring circuit 410.

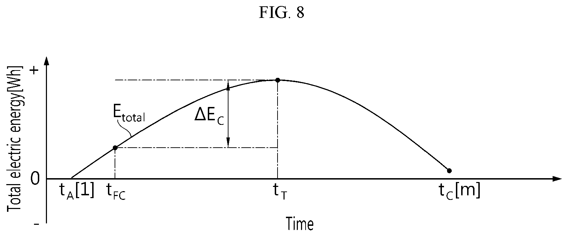

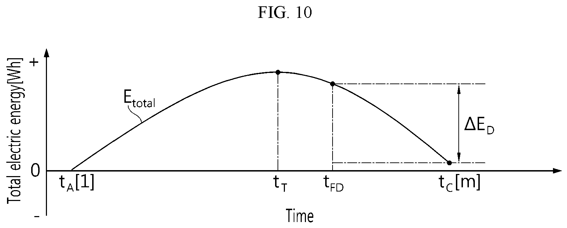

In step S620, the controller 420 determines if a failure of the power supply facility 100 occurred. When a value of the step S620 is "YES", the method of FIG. 6 may move to step S630. When the value of step S620 is "NO", the method of FIG. 6 may end. For reference, in FIGS. 8 and 10, $t_{FC}$ may denote the time when the failure of the power supply facility 100 in the charge dominant state occurred, and $t_{FD}$ may denote the time when the failure of the power supply facility 100 in the charge dominant state occurred.

In the step S630, the controller 420 determines if it is necessary to modify at least one of the first to m-th operation schedules based on the first to m-th operation schedules associated respectively with the first to m-th chargers/dischargers $CD_1\sim CD_m$ included in the charging/discharging facility 200 and electric energy information of the energy storage apparatus 300. When a value of the step S630 is "YES", the method of FIG. 6 may move to step S640. When the value of the step S630 is "NO", the method of FIG. 6 may end.

In the step S640, the controller 420 stops each charger/discharger associated with each operation schedule determined to need to be modified among the first to m-th chargers/dischargers $CD_1 \sim CD_m$.

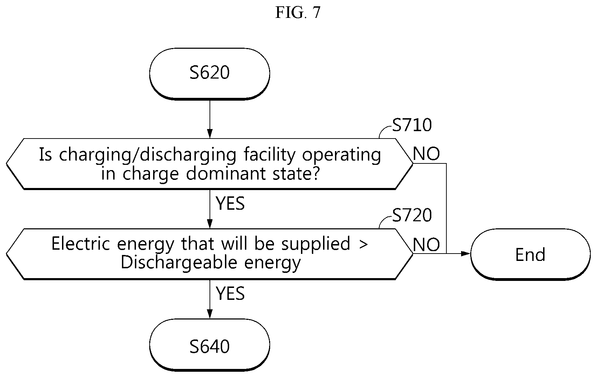

FIG. 7 is a flowchart schematically illustrating an example of subroutines that may be included in the step S630 of FIG. 6, and FIG. 8 is a graph referenced in describing the method of FIG. 7.

Referring to FIG. 7, in step S710, the controller 420 determines if the charging/discharging facility 200 is operating in the charge dominant state. A value of the step S710 being "YES" indicates that the failure of the power supply facility 100 occurred during the formation process of the charging/discharging facility 200 in the charge dominant state.

Assume that the electric energy curve $E_{total}$ of FIG. 8 is the same as the electric energy curve $E_{total}$ of FIG. 5. When $t_{FC}$ denotes the time when the failure of the power supply facility 100 occurred, because the time $t_{FC}$ is earlier than the time $t_T$ that will come afterwards, the output value of the step S710 may be "YES". When the value of the step S710 is "YES", the method may move to step S720.

In the step S720, the controller 420 determines if the electric energy that will be supplied to the charging/discharging facility 200 is larger than the dischargeable energy, by comparing the electric energy that will be supplied with the dischargeable energy.

Referring to FIG. 8, the electric energy that will be supplied $\Delta E_C$ may indicate the electric energy that will be supplied from the power supply facility 100 to the charging/discharging facility 200 from the time $t_{FC}$ to the time $t_T$ unless the failure of the power supply facility 100 occurred. The controller 420 may determine the electric energy that will be supplied $\Delta E_C$ according to a difference between the current value (total electric energy at the time $t_{FC}$) and the maximum value (total electric energy at the time $t_T$) of the total electric energy of the charging/discharging facility 200.

The electric energy that will be supplied may be determined through the following Equation 3 based on the above Equation 2.

<Equation 3>

$$\Delta E_C = \int_{t_{FC}}^{t_T} P_{total}(x)dx$$

When the energy storage apparatus 300 has electric energy greater than the electric energy that will be supplied at the time $t_{FC}$, the energy storage apparatus 300 may supply a sufficient amount of charge power to the charging/discharging facility 200 until the time $t_T$ in place of the power supply facility 100.

When the dischargeable energy is smaller than the electric energy that will be supplied, the energy storage apparatus 300 may run out of energy before the time $t_T$ comes, causing an unexpected cessation of the operation of the plurality of chargers/dischargers in the charge mode. Accordingly, a value of the step S720 being "YES" may indicate that it is necessary to modify at least one of the first to m-th operation schedules so that the electric energy that will be supplied is equal to or smaller than the dischargeable energy. When the value of the step S720 is "YES", the method may move to the step S640 of FIG. 6. When the value of the step S720 is "NO", the method according to FIG. 6 may end.

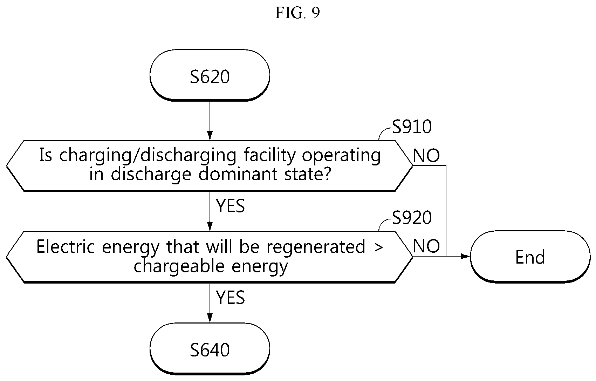

FIG. 9 is a flowchart schematically illustrating another example of subroutines that may be included in the step S630 of FIG. 6, and FIG. 10 is a graph referenced in describing the method of FIG. 9.

Referring to FIG. 9, in step S910, the controller 420 determines if the charging/discharging facility 200 is operating in the discharge dominant state. A value of the step S910 being "YES" indicates that the failure of the power supply facility 100 occurred during the formation process of the charging/discharging facility 200 in the discharge dominant state.

Assume that the electric energy curve $E_{total}$ of FIG. 10 is the same as the electric energy curve $E_{total}$ of FIG. 5. As opposed to $t_{FC}$ in FIG. 8, when $t_{FD}$ denotes the time when the failure of the power supply facility 100 occurred, because the time $t_{FD}$ is later than the time $t_T$, the output value of the step S910 may be "YES". When the value of the step S910 is "YES", the method may move to step S920.

In the step S920, the controller 420 determines if the electric energy that will be regenerated by the charging/discharging facility 200 is larger than the chargeable energy, by comparing the electric energy that will be regenerated with the chargeable energy.

Referring to FIG. 10, the electric energy that will be regenerated $\Delta E_D$ may indicate the electric energy that will be regenerated by the charging/discharging facility 200 from $t_{FD}$ to tc[m]. That is, the electric energy that will be regenerated $\Delta E_D$ may be a difference between the total electric energy at $t_{FD}$ and the total electric energy at $t_C[m]$ according to the electric energy curve $E_{total}$.

The electric energy that will be regenerated may be determined through the following Equation 4 based on the above Equation 2.

<Equation 4>

$$\Delta E_D = \int_{t_{FD}}^{t_C[m]} P_{total}(x)dx$$

When the chargeable energy at the time $t_{FD}$ is larger than the electric energy that will be regenerated, the regenerative power supplied from the charging/discharging facility 200 may be stored in the energy storage apparatus 300 from time $t_{FD}$ to $t_C[m]$.

When the chargeable energy is smaller than the electric energy that will be regenerated, the energy storage apparatus 300 may be fully charged before the time tc[m] comes, causing an unexpected cessation of the operation of the plurality of chargers/dischargers in the discharge mode. Accordingly, a value of the step S920 being "YES" may indicate that it is necessary to modify at least one of the first to m-th operation schedules so that the electric energy that will be regenerated is equal to or smaller than the chargeable energy. When the value of the step S920 is "YES", the method may move to the step S640 of FIG. 6. When the value of the step S920 is "NO", the method according to FIG. 6 may end.

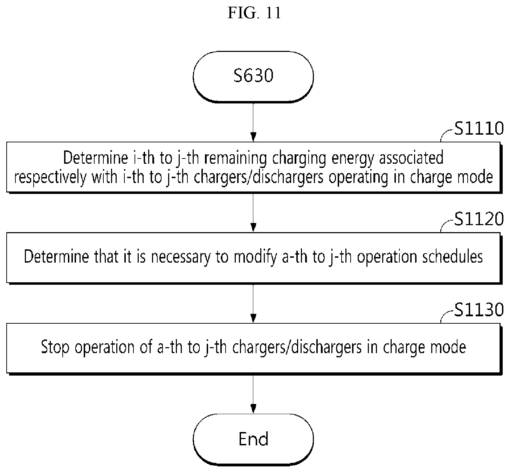

FIG. 11 is a flowchart schematically illustrating an example of subroutines that may be included in the step S640 of FIG. 6, and FIGS. 12 and 13 are graphs referenced in describing the method of FIG. 11.

Referring to FIG. 11, in step S1110, the controller 420 determines i-th to j-th remaining charging energy associated respectively with i-th to j-th chargers/-dischargers $CD_i \sim CD_j$ operating in the charge mode, where i is a natural number of 1 or greater, and j is a natural number that is larger than i and equal to or smaller than m.

Here, all the i-th to j-th chargers/dischargers $CD_i \sim CD_j$ may be chargers/dischargers that are already in the charge mode at the time ($t_{FC}$ in FIG. 8) when the failure occurred. Alternatively, at least one of the i-th to j-th chargers/dischargers $CD_i \sim CD_j$ may be a charger/-discharger that is already in the charge mode at the time when the failure occurred, and the other one of the i-th to j-th chargers/dischargers $CD_i \sim CD_j$ may be a charger/-discharger that will operate in the charge mode after the time when the failure occurred.

When y is a natural number that is equal to or larger than i and equal to or smaller than j, a y-th remaining charging energy may indicate the electric energy that will be supplied to a y-th charger/discharger $CD_y$ for the remaining time until the total electric energy of the charging/discharging facility 200 reaches the maximum value. The y-th remaining charging energy may be determined according to the following Equation 5.

<Equation 5>

$$EA_y = \int_{t_{FC}}^{t_T} P_y(t)\,dt$$

In Equation 5, $P_{y(t)}$ denotes the power of the y-th charger/discharger $CD_y$ at the time t, and $EA_y$ denotes the y-th remaining charging energy.

In step S1120, the controller 420 determines that it is necessary to modify a-th to j-th operation schedules among the i-th to j-th operation schedules, where a is a natural number that is equal to or larger than i and smaller than j. (i) The sum of a-th to j-th remaining charging energy among the i-th to j-th remaining charging energy is equal to or larger than the dischargeable energy (or the difference between the electric energy that will be supplied and the dischargeable energy), and (ii) the sum of (a+1)-th to j-th remaining charging energy is smaller than the dischargeable energy (or the difference between the electric energy that will be supplied and the dischargeable energy).

In step S1130, the controller 420 may stop the operation of the a-th to j-th chargers/dischargers $CD_a \sim CD_j$ in the charge mode. That is, each of the a-th to j-th operation schedules may be modified so that the power from the time $t_{FC}$ is 0 [W].

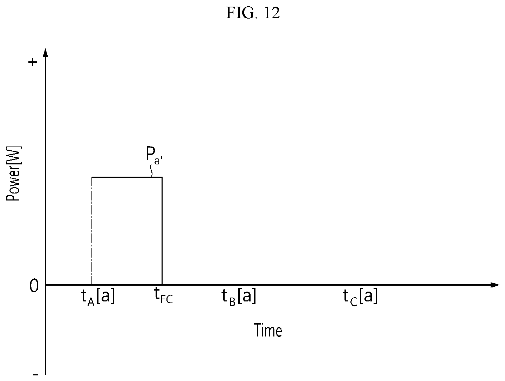

Referring to FIG. 12, when the a-th operation schedule is modified, only a part corresponding to $t_a[a] \sim t_{FC}$ among $t_A[a] \sim t_C[a]$ remains in the modified power profile $P_{a'}$ of the a-th charger/discharger $CD_a$, and the same is the case with the power profile of each of the other chargers/dischargers determined to be modified.

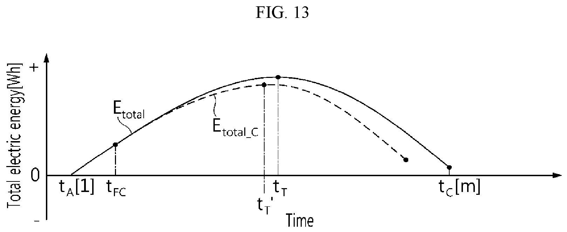

In addition, when the operation of the a-th to j-th chargers/discharger $CD_a \sim CD_j$ in the charge mode is stopped from the time $t_{FC}$, the electric energy curve $E_{total}$ may be changed to the modified electric energy curve $E_{total\_C}$ shown in FIG. 13. The total electric energy of the modified electric energy curve $E_{total\_C}$ is smaller than the total electric energy of the electric energy curve $E_{total}$ from the time $t_{FC}$. In addition, the maximum value of the total electric energy of the modified electric energy curve $E_{total\_C}$ is smaller than the maximum value of the total electric energy of the electric energy curve $E_{total}$, and the time $t_T'$ when the total electric energy is at the maximum is earlier than the time $t_T$.

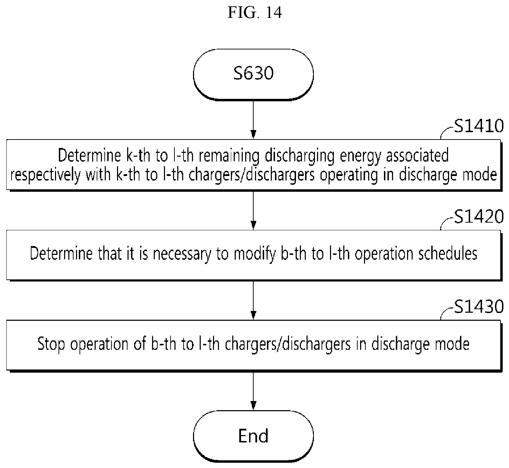

FIG. 14 is a flowchart schematically illustrating another example of subroutines that may be included in the step S640 of FIG. 6, and FIGS. 15 and 16 are graphs referenced in describing the method of FIG. 14.

Referring to FIG. 14, in step S1410, the controller 420 determines k-th to 1-th remaining discharging energy associated respectively with k-th to l-th chargers/-dischargers $CD_k \sim CD_l$ operating in the discharge mode, where k is a natural number of 1 or greater, and 1 is a natural number that is larger than k and equal to or smaller than m. Here, all the k-th to l-th chargers/dischargers $CD_k \sim CD_l$ may be chargers/dischargers that are already in the discharge mode at the time ($t_{FD}$ in FIG. 10) when the failure occurred. Alternatively, at least one of the k-th to l-th chargers/dischargers $CD_k \sim CD_l$ may be a charger/discharger that is already in the discharge mode at the time when the failure occurred, and the other one of the k-th to l-th chargers/dischargers $CD_k \sim CD_l$ may be a charger/discharger that will operate in the discharge mode after the time when the failure occurred.

When z is a natural number that is equal to or larger than k and equal to or smaller than 1, a z-th remaining discharging energy may indicate the electric energy that will be regenerated from a z-th charger/-discharger $CD_z$ for the remaining time until the total electric energy of the charging/discharging facility 200 reaches the minimum value. The z-th remaining discharging energy may be determined according to the following Equation 6.

<Equation 6>

$$EB_z = \int_{t_{FD}}^{t_C[m]} P_z(t)\,dt$$

In Equation 6, $P_{z(t)}$ denotes the power of the z-th charger/discharger $CD_z$ at the time $t$, and $EB_z$ denotes the z-th remaining discharging energy.

In step S1420, the controller 420 determines that it is necessary to modify b-th to l-th operation schedules among the k-th to l-th operation schedules, where b is a natural number that is equal to or larger than k and smaller than l. (i) The sum of b-th to k-th remaining discharging energy among the k-th to l-th remaining discharging energy is equal to or larger than the chargeable energy (or the difference between the electric energy that will be regenerated and the chargeable energy), and (ii) the sum of (b+1)-th to l-th remaining discharging energy is smaller than the chargeable energy (or the difference between the electric energy that will be regenerated and the chargeable energy).

In step S1430, the controller 420 may stop the operation of the b-th to l-th chargers/dischargers $CD_b \sim CD_l$ in the discharge mode. That is, each of the b-th to l-th operation schedules may be modified so that the power from the time $t_{FD}$ is 0 [W].

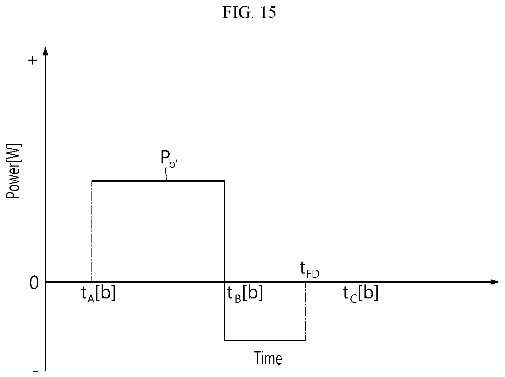

Referring to FIG. 15, when the b-th operation schedule is modified, only a part corresponding to $t_A[b] \sim t_{FD}$ among $t_A[b] \sim t_C[b]$ remains in the modified power profile $P_b$, of the b-th charger/discharger $CD_b$, and the same is the case with the power profile of each of the other chargers/dischargers determined to be modified.

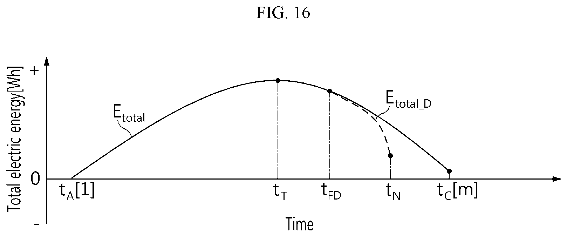

In addition, when the operation of the b-th to l-th chargers/dischargers $CD_b \sim CD_l$ in the discharge mode is stopped from the time $t_{FD}$, the electric energy curve $E_{total}$ may be changed to the modified electric energy curve $E_{total\_D}$ shown in FIG. 16. The total electric energy of the modified electric energy curve $E_{total\_D}$ is smaller than the total electric energy of the electric energy curve $E_{total}$ from the time $t_{FD}$. In addition, the minimum value of the total electric energy of the modified electric energy curve $E_{total\_D}$ is larger than the minimum value of the total electric energy of the electric energy curve $E_{total}$, and the time $t_N$ when the total electric energy is at the minimum is earlier than the time $t_C[m]$.

The embodiments of the present disclosure as described above are not embodied only through the apparatus and method, and may be implemented through the programs that perform the functions corresponding to the exemplary configurations of the present disclosure or the recording media having the programs recorded thereon, and such implementation may be easily achieved by those skilled in the art from the disclosure of the embodiments previously described.

Although the present disclosure has been hereinabove described with regard to certain embodiments and drawings, the present disclosure is not limited thereto and it is obvious to those skilled in the art that various modifications and changes may be made thereto within the technical aspects of the present disclosure and the scope of the appended claims and their equivalents.

Additionally, as many substitutions, modifications and changes may be made to the present disclosure as described above by those skilled in the art without departing from the technical aspects of the present disclosure, the present disclosure is not limited by the above-described embodiments and the accompanying drawings, and some or all of the embodiments may be selectively combined to allow various modifications.

**Claims**

1. A system operating apparatus for a battery formation system including a power supply facility, a charging/-discharging facility and an energy storage apparatus, the system operating apparatus comprising:

    a monitoring circuit to monitor a condition of the power supply facility; and
    a controller to, in response to a failure of the power supply facility being monitored, determine if it is necessary to modify at least one of first to m-th operation schedules of first to m-th chargers/dischargers included in the charging/-discharging facility based on the first to m-th operation schedules and electric energy information of the energy storage apparatus, and stop each charger/discharger of the first to m-th chargers/dischargers associated with each operation schedule determined to need to be modified,
    wherein m is a natural number of 2 or greater.

2. The system operating apparatus according to claim 1,
    wherein the controller is configured to:
    determine if it is necessary to modify the at least one of the first to m-th operation schedules, by comparing electric energy that will be supplied to the charging/-discharging facility with dischargeable energy of the energy storage apparatus.

3. The system operating apparatus according to claim 2,
    wherein the controller is configured to:
    determine that it is necessary to modify the at least one of the first to m-th operation schedules, when the electric energy that will be supplied is larger than the dischargeable energy.

4. The system operating apparatus according to claim 2,
    wherein the controller is configured to:

determine the electric energy that will be supplied based on a difference between a current value and a maximum value of a total electric energy of the charging/discharging facility.

5. The system operating apparatus according to claim 3,
wherein the controller is configured to:

determine i-th to j-th remaining charging energy of i-th to j-th chargers/dischargers operating in a charge mode among the first to m-th chargers/dischargers, and
determine that it is necessary to modify a-th to j-th operation schedules among i-th to j-th operation schedules, wherein (i) a sum of a-th to j-th remaining charging energy among the i-th to j-th remaining charging energy is equal to or larger than the dischargeable energy, and (ii) a sum of (a+1)-th to j-th remaining charging energy is smaller than the dischargeable energy, and wherein i is a natural number of 1 or greater, j is a natural number that is larger than i and equal to or smaller than m, and a is a natural number that is equal to or larger than i and smaller than j.

6. The system operating apparatus according to claim 1,
wherein the controller is configured to:
determine if it is necessary to modify the at least one of the first to m-th operation schedules, by comparing electric energy that will be regenerated by the charging/discharging facility with chargeable energy of the energy storage apparatus.

7. The system operating apparatus according to claim 6,
wherein the controller is configured to:
determine that it is necessary to modify the at least one of the first to m-th operation schedules, when the electric energy that will be regenerated is larger than the chargeable energy.

8. The system operating apparatus according to claim 6,
wherein the controller is configured to:
determine the electric energy that will be regenerated based on a difference between a current value and a minimum value of a total electric energy of the charging/discharging facility.

9. The system operating apparatus according to claim 7,
wherein the controller is configured to:

determine k-th to 1-th remaining discharging energy of k-th to l-th chargers/dischargers operating in a discharge mode among the first to m-th chargers/dischargers, and
determine that it is necessary to modify b-th to l-th operation schedules among k-th to l-th operation schedules, wherein (i) a sum of b-th to l-th remaining discharging energy among the k-th to l-th remaining discharging energy is equal to or larger than the chargeable energy, and (ii) a sum of (b+1)-th to l-th remaining discharging energy is smaller than the chargeable energy, and wherein k is a natural number of 1 or greater, 1 is a natural number that is larger than k and equal to or smaller than m, and b is a natural number that is equal to or larger than k and smaller than 1.

10. A battery formation system comprising the system operating apparatus according to any one of claims 1 to 9.

11. A system operating method for a battery formation system including a power supply facility, a charging/discharging facility and an energy storage apparatus, the system operating method comprising:

monitoring a condition of the power supply facility;
in response to a failure of the power supply facility being monitored, determining if it is necessary to modify at least one of first to m-th operation schedules of first to m-th chargers/dischargers included in the charging/discharging facility based on the first to m-th operation schedules and electric energy information of the energy storage apparatus; and
stopping each charger/discharger of the first to m-th chargers/dischargers associated with each operation schedule determined to need to be modified,
wherein m is a natural number of 2 or greater.

12. The system operating method according to claim 11, wherein the determining if it is necessary to modify the at least one of the first to m-th operation schedules comprises:
determining if it is necessary to modify the at least one of the first to m-th operation schedules, by comparing electric energy that will be supplied to the charging/discharging facility with dischargeable energy of the energy storage apparatus.

13. The system operating method according to claim 12, wherein the determining if it is necessary to modify the at least one of the first to m-th operation schedules comprises:
determining that it is necessary to modify the at least one of the first to m-th operation schedules, when the electric energy that will be supplied is larger than the dischargeable energy.

14. The system operating method according to claim 11, wherein the determining if it is necessary to modify the at least one of the first to m-th operation schedules comprises:

    determining if it is necessary to modify the at least one of the first to m-th operation schedules, by comparing electric energy that will be regenerated by the charging/discharging facility with chargeable energy of the energy storage apparatus.

15. The system operating method according to claim 14, wherein the determining if it is necessary to modify the at least one of the first to m-th operation schedules comprises:

    determining that it is necessary to modify the at least one of the first to m-th operation schedules, when the electric energy that will be regenerated is larger than the chargeable energy.

FIG. 1

10

Battery formation system

100

Power supply facility

200

Charging/discharging facility

300

Energy storage apparatus

400

System operating apparatus

410

Monitoring circuit

420

Controller

FIG. 2

FIG. 3

FIG. 4

FIG. 5

FIG. 6

```
                    ┌─────────────┐
                    │    Start    │
                    └──────┬──────┘
                           │                      ╭─S610
        ┌──────────────────▼───────────────────────────┐
        │  Monitor condition of power supply facility and│
        │    condition of energy storage apparatus       │
        └──────────────────┬───────────────────────────┘
                           │                      ╭─S620
        ╱──────────────────▼───────────────────╲  NO
        ⟨  Did failure of power supply facility occur? ⟩──────┐
        ╲──────────────────┬───────────────────╱             │
                        YES │                    ╭─S630        │
        ╱──────────────────▼───────────────────╲  NO          │
        ⟨  Is it necessary to modify at least one of ⟩───┐    │
        ⟨     first to m-th operation schedules?      ⟩   │    │
        ╲──────────────────┬───────────────────╱         │    │
                        YES │                   ╭─S640     │    │
        ┌──────────────────▼───────────────────┐         │    │
        │  Stop each charger/discharger associated with │    │
        │ each operation schedule determined to need to be│  │
        │ modified among first to m-th chargers/dischargers│ │
        └──────────────────┬───────────────────┘         │    │
                           │◄────────────────────────────┘    │
                           │◄─────────────────────────────────┘
                    ┌──────▼──────┐
                    │     End     │
                    └─────────────┘
```

FIG. 7

S620

S710

Is charging/discharging facility operating in charge dominant state? NO

YES

S720

Electric energy that will be supplied > Dischargeable energy NO → End

YES

S640

FIG. 8

FIG. 9

```
                    ┌──────────────┐
                    │     S620     │
                    └──────────────┘
                           │
                           ▼                          S910
        ╱────────────────────────────────────╲
       ╱  Is charging/discharging facility     ╲  NO
       ╲  operating in discharge dominant state? ╱────────┐
        ╲────────────────────────────────────╱           │
                           │ YES                          │
                           ▼                    S920       │
        ╱────────────────────────────────────╲            │
       ╱  Electric energy that will be          ╲  NO     ▼
       ╲  regenerated > chargeable energy        ╱──────► ┌────────┐
        ╲────────────────────────────────────╱           │  End   │
                           │ YES                          └────────┘
                           ▼
                    ┌──────────────┐
                    │     S640     │
                    └──────────────┘
```

FIG. 10

FIG. 11

S630

S1110

Determine i-th to j-th remaining charging energy associated respectively with i-th to j-th chargers/dischargers operating in charge mode

S1120

Determine that it is necessary to modify a-th to j-th operation schedules

S1130

Stop operation of a-th to j-th chargers/dischargers in charge mode

End

FIG. 12

FIG. 13

FIG. 14

```
                    ╭─────────────╮
                    │    S630     │
                    ╰──────┬──────╯
                           │                              ┌S1410
        ┌──────────────────▼───────────────────────────────────┐
        │   Determine k-th to l-th remaining discharging energy associated     │
        │ respectively with k-th to l-th chargers/dischargers operating in discharge mode │
        └──────────────────┬───────────────────────────────────┘
                           │                              ┌S1420
        ┌──────────────────▼───────────────────────────────────┐
        │   Determine that it is necessary to modify b-th to l-th operation schedules   │
        └──────────────────┬───────────────────────────────────┘
                           │                              ┌S1430
        ┌──────────────────▼───────────────────────────────────┐
        │    Stop operation of b-th to l-th chargers/dischargers in discharge mode     │
        └──────────────────┬───────────────────────────────────┘
                           │
                    ╭──────▼──────╮
                    │     End     │
                    ╰─────────────╯
```

FIG. 15

FIG. 16

## INTERNATIONAL SEARCH REPORT

| International application No. |
|---|
| **PCT/KR2025/002103** |

| A. | CLASSIFICATION OF SUBJECT MATTER |
|---|---|

**H02J 7/00**(2006.01)i; **H02J 3/32**(2006.01)i

According to International Patent Classification (IPC) or to both national classification and IPC

| B. | FIELDS SEARCHED |
|---|---|

Minimum documentation searched (classification system followed by classification symbols)

H02J 7/00(2006.01); G01R 19/165(2006.01); H01M 10/04(2006.01); H01M 10/42(2006.01); H01M 10/44(2006.01); H02J 3/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 활성화 시스템(battery activation system), 충전(charging), 방전(discharging), 모니터링(monitoring)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0065600 A (LG ENERGY SOLUTION, LTD.) 20 May 2022 (2022-05-20) See paragraphs [0005]-[0006] and [0036]-[0084] and figures 1-6. | 1,10-11 |
| A | | 2-9,12-15 |
| A | WO 2023-170879 A1 (EV MOTORS JAPAN CO., LTD.) 14 September 2023 (2023-09-14) See paragraphs [0012]-[0021] and figures 1-7. | 1-15 |
| A | JP 2021-190159 A (SOFT ENERGY CONTROLS INC.) 13 December 2021 (2021-12-13) See claims 1-6 and figures 1-6. | 1-15 |
| A | JP 2019-175670 A (SOFT ENERGY CONTROLS INC.) 10 October 2019 (2019-10-10) See paragraphs [0012]-[0021] and figures 1-6. | 1-15 |
| A | US 2012-0262121 A1 (KUO, Kuo-Cheng et al.) 18 October 2012 (2012-10-18) See claims 1-6 and figures 1-3. | 1-15 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **13 May 2025** | **14 May 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 757 110 A1

**INTERNATIONAL SEARCH REPORT**
Information on patent family members

International application No.

**PCT/KR2025/002103**

| Patent document cited in search report | | | Publication date (day/month/year) | Patent family member(s) | | | Publication date (day/month/year) |
|---|---|---|---|---|---|---|---|
| KR | 10-2022-0065600 | A | 20 May 2022 | CN | 114946098 | A | 26 August 2022 |
| | | | | EP | 4075627 | A1 | 19 October 2022 |
| | | | | EP | 4075627 | A4 | 16 August 2023 |
| | | | | KR | 10-2654899 | B1 | 03 April 2024 |
| | | | | US | 12088103 | B2 | 10 September 2024 |
| | | | | US | 2023-0055592 | A1 | 23 February 2023 |
| | | | | WO | 2022-103183 | A1 | 19 May 2022 |
| WO | 2023-170879 | A1 | 14 September 2023 | CN | 118679660 | A | 20 September 2024 |
| | | | | DE | 112022006821 | T5 | 24 December 2024 |
| | | | | KR | 10-2024-0136394 | A | 13 September 2024 |
| | | | | TW | 202349782 | A | 16 December 2023 |
| | | | | TW | I854520 | B | 01 September 2024 |
| JP | 2021-190159 | A | 13 December 2021 | JP | 6841457 | B1 | 10 March 2021 |
| JP | 2019-175670 | A | 10 October 2019 | JP | 6461401 | B1 | 30 January 2019 |
| | | | | TW | 201943142 | A | 01 November 2019 |
| | | | | TW | I686979 | B | 01 March 2020 |
| | | | | WO | 2019-189170 | A1 | 03 October 2019 |
| US | 2012-0262121 | A1 | 18 October 2012 | TW | 201242218 | A | 16 October 2012 |
| | | | | TW | I431896 | B | 21 March 2014 |
| | | | | US | 8643334 | B2 | 04 February 2014 |

Form PCT/ISA/210 (patent family annex) (July 2022)

30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240030856

- KR 1020250016858